# EUROPÄISCHE PATENTSCHRIFT

(11) **EP 3 572 687 B1**
(45) Veröffentlichungstag und Bekanntmachung des Hinweises auf die Patenterteilung: **07.07.2021**
(21) Anmeldenummer: 19176471.1
(22) Anmeldetag: 24.05.2019
(51) Int. Cl.: F16F 9/05, F16F 9/43, B60G 17/052, B60G 99/00, B62D 33/06, B62D 33/10

(54) **LUFTFEDER ZUR STEUERUNG DER NIVEAULAGE EINER FAHRERKABINE ODER EINES KRAFTFAHRZEUGS**
AIR SPRING FOR CONTROLLING THE LEVEL OF A DRIVER 'S CAB OR OF A MOTOR VEHICLE
RESSORT PNEUMATIQUE PERMETTANT DE COMMANDER LE NIVEAU D'UNE CABINE DE CONDUCTEUR OU D'UN VÉHICULE AUTOMOBILE

(30) Priorität: 25.05.2018 DE 102018112627
(43) Veröffentlichungstag der Anmeldung: 27.11.2019
(73) Patentinhaber: Vibracoustic CV Air Springs GmbH, 20099 Hamburg (DE)
(72) Erfinder: WEBER, Michael, 21244 Buchholz (DE)
(74) Vertreter: Patentanwälte Olbricht Buchhold Keulertz

(56) Entgegenhaltungen:
- EP-A1- 3 141 773
- EP-A2- 2 581 625
- DE-A1-102010 012 346
- US-A- 2 361 575

## Beschreibung

Die vorliegende Erfindung betrifft eine Luftfeder zur Steuerung der Niveaulage einer Fahrerkabine oder eines Kraftfahrzeugs mit einem Verschlusselement, einem Abrollkolben und einem Luftfederbalg, der mit dem Abrollkolben und dem Verschlusselement unter Ausbildung eines mit Fluid gefüllten Druckraums verbunden ist.

Luftfedern der eingangs genannten Artikel werden dazu verwendet, um zwei zueinander bewegliche Kraftfahrzeugteile abzufedern und dadurch den Federungskomfort von Kraftfahrzeugen oder Fahrerkabinen zu erhöhen. Bei einer Ein- und Ausfederung rollt der Luftfederbalg an der Außenfläche des Abrollkolbens ab, um so die eingeleiteten Schwingungen abzufedern.

Ferner ist es bekannt, in eine Luftfeder auch eine Dämpfungsfunktion zu integrieren. Eine derartige Luftfeder wird auch als Luftfederdämpfer bezeichnet. Hierzu ist ein hydraulischer Dämpfer oder Hydraulikdämpfer in die Luftfeder integriert, und/oder das in dem Druckraum befindliche Fluid strömt zwischen dem Druckraum und einer weiteren Kammer über einen Dämpfungskanal hin und her.

Daneben werden Luftfedern auch dazu verwendet, um eine gewünschte Niveaulage eines Kraftfahrzeugs oder einer Fahrerkabine bei unterschiedlicher Beladung oder Gewichtsbelastung konstant zu halten oder einstellbar zu verändern. Hierzu wird der Druck in dem Druckraum durch Zufuhr von Fluid oder durch Ablassen von Fluid in Abhängigkeit vom Luftfederhub verändert. Dazu ist der Druckraum über ein Steuerventil mit einer Fluidquelle verbunden, wobei das Steuerventil während einer Ein- und Ausfederung bzw. in Abhängigkeit vom Beladungszustand oder einer Gewichtsbelastung Fluid dem Druckraum zuführt bzw. ablässt.

Aus DE 10 2011 108 249 A1 ist eine Luftfeder bekannt, die ein in die Luftfeder integriertes, mechanisch betätigbares Steuerventil zur Steuerung der Niveaulage eines Kraftfahrzeugs oder einer Fahrerkabine aufweist. Das Steuerventil ist an dem Deckel angebracht und umfasst Regelventile zur Regelung der Druckluftzufuhr bzw. des Druckluftablasses. Die Betätigung der Regelventile erfolgt über Nocken, die an einer drehbaren Nockenwelle angebracht sind. Die Drehbewegung der Nockenwelle erfolgt dabei über einen Schlepphebel, der mit seinem freien Ende an einer Auflagefläche am Abrollkolben der Luftfeder aufliegt. Durch die Schwenkbewegung des Schlepphebels wird die Nockenwelle verdreht, wodurch je nach Ein- oder Ausfederung der Luftfeder einer der Nocken einen der Stößel der von Federkräften zugehaltenen Regelventile betätigt.

Aus DE 10 2011 114 570 A1 ist eine Luftfederanordnung bekannt, welche der nächstliegende Stand der Technik darstellt und welche eine integrierte Ventilsteuerung zur Steuerung der Niveaulage eines Kraftfahrzeugs oder einer Fahrerkabine aufweist. Die integrierte Ventilsteuerung umfasst ein Lufteinlassventil und ein Luftauslassventil. Zum Öffnen und Schließen der Ventile ist eine Druckfedereinrichtung vorgesehen, die zweiteilig ausgebildet ist. Die Druckfedereinrichtung weist eine dem Abrollkolben oder dem Deckel zugewandte Zentralfeder und eine dem Luftauslassventil zugewandte Steuerventilvorspannfeder auf.

Die Zentralfeder und die Steuerventilvorspannfeder sind auf einem zwischen dem Abrollkolben und dem Deckel axial frei beweglich gelagerten Führungsrohr angeordnet. Zwischen den beiden Federn ist ein radial abragender Anschlag angeordnet, der als Steuerungsmittel zum Betätigen des Ventilstößels des Einlassventils dient. Die Druckfedereinrichtung wird zwischen Spannmitteln gehalten, wobei eines der Spannmittel das Auslassventil betätigt. Beim Einfedern gleitet das Führungsrohr nach unten, und gleichzeitig wird die Steuerventilvorspannfeder komprimiert, bis der Anschlag nach Überbrückung eines Friewegs das Einlassventil kontaktiert und dieses betätigt. Bei einer Ausfederung bewegt sich das Führungsrohr nach oben, wobei die Steuerventilvorspannfeder ausfedert, so dass sich das dem Auslassventil zugeordnete Spannmittel von diesem wegbewegt und das Auslassventil öffnet.

Das DE 10 2010 012 346 A1 und das US 2 361 575 offenbaren weitere Luftfeder, welche eine integrierte Ventilsteuerung zur Steuerung der Niveaulage eines Kraftfahrzeugs oder einer Fahrerkabine aufweisen.

Der vorliegenden Erfindung liegt die Aufgabe zugrunde, eine Luftfeder zu schaffen, die eine verbesserte Niveauregulierung, einen verbesserten Komfort sowie eine höhere Lebensdauer aufweist und gleichzeitig kostengünstig ist.

Zur Lösung der Aufgabe wird eine Luftfeder mit den Merkmalen des Anspruchs 1 vorgeschlagen.

Vorteilhafte Ausgestaltungen der Luftfeder sind Gegenstand der abhängigen Ansprüche.

Die Luftfeder zur Steuerung der Niveaulage einer Fahrerkabine oder eines Kraftfahrzeuges, weist ein Verschlusselement, einen Abrollkolben und einen Luftfederbalg auf, der mit dem Abrollkolben und dem Verschlusselement unter Ausbildung eines mit Fluid gefüllten Druckraumes verbunden ist, wobei ein Niveausteuerungssystem zum Zuführen und/oder Abführen von Fluid in den Druckraum integriert ist, um die Niveaulage der Fahrerkabine oder des Kraftfahrzeuges in Abhängigkeit vom Luftfederhub zu steuern, wobei das Niveausteuerungssystem wenigstens ein Steuerventil zum Zu- und/oder Abführen des Fluids in den Druckraum und eine Betätigungseinrichtung aufweist, die mit dem Steuerventil in Wirkverbindung steht, wobei die Betätigungseinrichtung ein Führungsrohr, das mit dem Abrollkolben oder dem Verschlusselement gekoppelt und beweglich innerhalb des Druckraumes angeordnet ist, ein Betätigungselement, das als Stiftelement ausgebildet ist und das Steuerventil betätigt, und eine Druckfedereinrichtung aufweist, wobei die Druckfedereinrichtung eine mit dem Abrollkolben oder dem Verschlusselement gekoppelte Zentralfeder und eine mit dem Stiftelement gekoppelte Vorspannfeder aufweist, wobei das Führungsrohr einen Steuerflansch aufweist, mit dem das Stiftelement gekoppelt ist und an dem sich die Vorspannfeder abstützt, um das Stiftelement gegen das Steuerventil zu drücken.

Durch die konstruktive Ausgestaltung der Betätigungseinrichtung kann sich die Vorspannfeder vollflächig an dem Steuerflansch abstützen, so dass die gesamte Federkraft der Vorspannfeder auf das Betätigungselement und damit auf das Steuerventil drückt. Dadurch kann die Federkraft beziehungsweise die Vorspannung der Vorspannfeder und der Zentralfeder reduziert werden. Somit weist die Druckfedereinrichtung der Luftfeder insgesamt eine geringe Vorspannung auf, wodurch der Komfort und das akustische Verhalten der Luftfeder verbessert ist. Durch die reduzierte Vorspannung der Druckfedereinrichtung kann das Verschlusselement dünner ausgebildet werden, was zu einer Materialeinsparung führt. Zudem kann für das Verschlusselement und/oder den Abrollkolben ein Material mit einer geringeren Steifigkeit beziehungsweise Festigkeit, wie beispielsweise PA6, verwendet werden, was zu einer Kostenersparnis führt. Darüber hinaus weist die Betätigungseinrichtung eine geringe Teileanzahl auf, so dass die Montagekosten der Luftfeder reduziert sind. Ferner kann der Durchmesser des Abrollkolbens reduziert werden, so dass die Steifigkeit der Luftfeder in einem größeren Bereich dargestellt werden kann. Schließlich steht aufgrund der konstruktiven Ausgestaltung der Betätigungseinrichtung mehr Bauraum für eine Dämpferkappe zur Verfügung, so dass deren Durchmesser vergrößert werden kann, was in einer höheren Lebensdauer eines Puffers resultiert. Zudem weist die Druckfedereinrichtung, insbesondere die Zentralfeder, einen geringen Federweg auf. Darüber hinaus kann aufgrund der konstruktiven Ausgestaltung des Niveauregulierungssystems eine aus dem Stand der Technik erforderliche Hilfsfeder entfallen, so dass bei einer Integration eines Hydraulikdämpfers der Oberflächenbeschichtungsabrieb an dem Hydraulikdämpfer durch die Hilfsfeder vermieden wird.

Als Fluid wird bevorzugt Luft, insbesondere Druckluft, verwendet. Ferner kann als Fluid Gas oder ein kompressibles Medium verwendet werden.

In einer vorteilhaften Ausgestaltung kann wenigstens eine Dämpfungsvorrichtung in die Luftfeder integriert sein. Die Dämpfungsvorrichtung kann als Arbeitsmedium das in dem Druckraum befindliche Fluid verwenden. Hierzu kann die Luftfeder neben dem Druckraum eine weitere Kammer aufweisen, die über einen Dämpfungskanal miteinander verbunden sind. Durch Variation des Dämpfungskanalquerschnitts kann die Dämpfungscharakteristik eingestellt werden. Darüber hinaus kann als Dämpfungsvorrichtung ein separater Hydraulikdämpfer in die Luftfeder integriert sein. Eine mit einer Dämpfungsvorrichtung versehene Luftfeder kann auch als Luftfederdämpfer bezeichnet werden.

In einer vorteilhaften Ausgestaltung sind das Stiftelement und der Steuerflansch relativ zueinander beweglich. Hierzu kann das Stiftelement beweglich in einer Durchgangsöffnung des Steuerflansches gelagert sein. Vorteilhaft überdeckt der Steuerflansch in Radialrichtung das Steuerventil. Weiterhin vorteilhaft überdeckt der Steuerflansch die Vorspannfeder in Radialrichtung vollflächig. Dadurch wird die Vorspannung der Vorspannfeder und der Zentralfeder reduziert. Zudem kann sich die Vorspannfeder vollflächig an dem Steuerflansch abstützen. Weiterhin vorteilhaft ist das Führungsrohr in Ein- und Ausfederrichtung innerhalb des Druckraumes bewegbar.

In einer vorteilhaften Ausgestaltung stützt sich die Vorspannfeder auf einer dem Steuerventil zugewandten Seite des Steuerflansches vollflächig ab. Dadurch drückt die gesamte Kraft der Vorspannfeder auf das Auslassventil.

In einer vorteilhaften Ausgestaltung sind die Zentralfeder und die Vorspannfeder als Druckfedern ausgebildet. So kann die Zentralfeder stärker vorgespannt sein als die Vorspannfeder. Darüber hinaus kann die Zentralfeder eine größere Federkraft als die Vorspannfeder aufweisen. Über den Federweg der Zentralfeder kann der Luftfederhub in Einfederungsrichtung eingestellt werden.

In einer vorteilhaften Ausgestaltung ist der Steuerflansch stoffschlüssig und materialeinheitlich mit dem Führungsrohr verbunden.

In einer vorteilhaften Ausgestaltung sind der Abrollkolben, das Verschlusselement, das Führungsrohr, der Steuerflansch und/oder das Stiftelement aus einem Kunststoff, insbesondere einem faserverstärkten Kunststoff.

In einer vorteilhaften Ausgestaltung ist die Vorspannfeder derart vorgespannt, dass bei einer Ausfederung die Vorspannfeder das Stiftelement über einen ersten Freiweg gegen das Steuerventil drückt. Dadurch wird das Steuerventil nicht schon bei kleinen Ausfederbewegungen betätigt.

In einer vorteilhaften Ausgestaltung sind das Stiftelement und der Steuerflansch relativ zueinander bewegbar, so dass sich während einer Ausfederung der Luftfeder der Steuerflansch über einen ersten Freiweg relativ zu dem Stiftelement bewegt und nach Überbrückung des ersten Freiwegs der Steuerflansch das Stiftelement mitnimmt und von dem Steuerventil wegbewegt. Da der Steuerflansch und das Stiftelement relativ zueinander bewegbar sind, wird das Stiftelement während einer Ausfederung der Luftfeder aufgrund der Vorspannung der Vorspannfeder solange gegen das Steuerventil gedrückt, bis der erste Freiweg überbrückt ist. Erst nach Überbrückung des ersten Freiwegs bewegt sich das Stiftelement von dem Steuerventil weg. Der erste Freiweg entspricht der Vorspannung der Vorspannfeder. Vorteilhaft erstreckt sich das Stiftelement durch eine in dem Steuerflansch eingebrachte Durchgangsöffnung durch.

In einer vorteilhaften Ausgestaltung weist das Stiftelement an einem ersten Ende eine Erweiterung auf. Die Erweiterung bewirkt eine Mitnahme des Stiftelements während einer Ausfederung, wenn der Steuerflansch den ersten Freiweg überwunden hat. Das Stiftelement ist vorteilhaft beweglich in der Durchgangsöffnung geführt, wobei der Durchmesser der Erweiterung größer als der Durchmesser der Durchgangsöffnung ist.

In einer vorteilhaften Ausgestaltung ist die Erweiterung als Rastnasen ausgebildet. Über die Rastnasen erfolgt die Mitnahme des Stiftelements während einer Ausfederung der Luftfeder, nachdem der Steuerflansch den ersten Freiweg überwunden hat. Die Rastnasen sind vorteilhaft an einem freien Ende des Stiftelementes angeordnet. Ferner können die Rastnasen aus elastisch verschwenkbaren Stiften gebildet sein, die voneinander durch Ausnehmungen getrennt und an ihren freien Enden mit einer Verdickung versehen sind. Über die Verdickung erfolgt die Mitnahme des Stiftelementes durch den Steuerflansch, wenn der erste Freiweg überbrückt wurde. Ferner erfolgt über die Rastnasen zudem die Befestigung des Stiftelements an dem Steuerflansch. Hierzu wird das Stiftelement mit den Rastnasen in die Durchgangsöffnung eingesetzt, so dass die Rastnasen verschwenken. Wenn die Rastnasen aus der Durchgangsöffnung heraustreten, verschwenken diese wieder in ihre ursprüngliche Stellung und verhindern so ein Herausziehen des Stiftelementes aus der Durchgangsöffnung.

In einer vorteilhaften Ausgestaltung weist das Stiftelement an einem zweiten Ende einen umlaufenden Absatz auf, an dem sich die Vorspannfeder abstützt, um das Stiftelement gegen das Steuerventil zu drücken. Somit übt die Vorspannfeder über den umlaufenden Absatz eine Kraft auf das Stiftelement aus, um selbiges gegen das Steuerventil zu drücken. Demgemäß stützt sich die Vorspannfeder einerseits an dem Steuerflansch und andererseits an dem Absatz ab und drückt das Stiftelement aufgrund seiner Vorspannung gegen das Steuerventil. In einer vorteilhaften Ausgestaltung ist der Durchmesser des Absatzes größer als der Durchmesser der Durchgangsöffnung.

In einer vorteilhaften Ausgestaltung weist das Steuerventil ein Auslassventil und ein Einlassventil auf, wobei das Stiftelement mit dem Auslassventil und der Steuerflansch mit dem Einlassventil wirkverbunden ist. Über das Einlassventil kann Fluid dem Druckraum zugeführt, und über das Auslassventil kann Fluid aus dem Druckraum abgeführt werden. Vorteilhaft sind die beiden Ventile als Federventile ausgebildet. Aufgrund der konstruktiven Ausgestaltung der Betätigungseinrichtung können das Einlassventil und das Auslassventil im Vergleich zu den aus dem Stand der Technik bekannten Ventilen kürzer ausgebildet sein. Dadurch wird ein Kostenvorteil erzielt. Zudem wird durch die niedrige Bauweise des Einlassventils der Abrieb in dem Einlassventil durch die darin integrierte Feder reduziert und damit dessen Lebensdauer erhöht. Vorteilhaft ist die Vorspannung beziehungsweise die Federkraft der Vorspannfeder größer als die Federkraft der Feder des Auslassventils.

In einer vorteilhaften Ausgestaltung ist die Betätigungseinrichtung derart ausgebildet, dass während einer Ausfederung das Einlassventil geschlossen und das Auslassventil geöffnet und während einer Einfederung das Einlassventil geöffnet und das Auslassventil geschlossen sind. Insbesondere ist die Betätigungseinrichtung derart ausgebildet, dass während einer Ausfederung das Einlassventil geschlossen und das Auslassventil nach Überbrückung des ersten Freiwegs geöffnet ist und während einer Einfederung das Einlassventil nach Überbrückung eines zweiten Freiwegs geöffnet und das Auslassventil geschlossen ist. Über die Abstimmung der Federkräfte der Zentralfeder und der Vorspannfeder zueinander lässt sich in einfacher Weise eine Schaltreihenfolge beim Ein- und Ausfedern der Luftfeder realisieren. Insbesondere kann über die Federkraft beziehungsweise die Vorspannung beider Federn ein definierter Schaltzustand eingestellt werden.

In einer vorteilhaften Ausgestaltung drückt während einer Einfederung nach Überbrückung eines zweiten Freiwegs der Steuerflansch gegen das Einlassventil, um das Einlassventil zu öffnen. Dadurch wird das Einlassventil nicht unmittelbar bei einer Einfederung der Luftfeder betätigt sondern erst nach Überwindung des zweiten Freiwegs.

In einer vorteilhaften Ausgestaltung weist die Betätigungseinrichtung eine weitere Feder auf, die zwischen dem Steuerflansch und dem Einlassventil angeordnet ist und die den Steuerflansch von dem Auslassventil wegdrückt. Vorteilhaft drückt die weitere Feder das Stiftelement nach Überbrückung des ersten Freiwegs von dem Auslassventil weg. Somit bewirkt die Feder, dass das Stiftelement von dem Auslassventil während einer Ausfederung wegbewegt wird, um das Auslassventil zu öffnen.

In einer vorteilhaften Ausgestaltung ist die Zentralfeder um das Führungsrohr angeordnet. Insbesondere liegt die Zentralfeder direkt am Führungsrohr an. Dadurch wird die Zentralfeder während der Ein- und Ausfederung geführt.

In einer vorteilhaften Ausgestaltung ist der Abrollkolben über ein Flanschelement mit dem Führungsrohr verbunden, wobei sich das Flanschelement auf der Zentralfeder abstützt und verschiebbar auf dem Führungsrohr angeordnet ist. Der Abrollkolben drückt somit während einer Einfederung über das Flanschelement auf die Zentralfeder, so dass diese bei einer Einfederung komprimiert wird. In einer vorteilhaften Ausgestaltung weist das Führungsrohr endseitig Nasen auf, die ein Herunterrutschen des Flanschelementes von dem Führungsrohr verhindern. Das Flanschelement ist vorteilhaft als eine Ringscheibe ausgebildet, wobei sich der Abrollkolben radial außen auf dem Flanschelement abstützt. Die Ringscheibe kann radial innen mit einem Hülsenabschnitt versehen sein.

In einer vorteilhaften Ausgestaltung weist das Führungsrohr wenigstens einen Vorsprung auf, der sich während einer Ein- und Ausfederung innerhalb eines in dem Verschlusselement eingebrachten Kanals bewegt. Dadurch wird eine Rotation zwischen der Betätigungseinrichtung und einem Dämpfer während einer Ein- und Ausfederung verhindert.

In einer vorteilhaften Ausgestaltung weist die Luftfeder einen Dämpfer auf, auf dem das Führungsrohr beweglich angeordnet ist. Dadurch weist die Luftfeder neben der Federungs- und Niveausteuerungsfunktion auch eine Dämpfungsfunktion auf. Ferner wird die Bewegung des Führungsrohrs während einer Ein- und Ausfederung auf dem Dämpfer sicher geführt. Bevorzugt ist der Dämpfer als Hydraulikdämpfer ausgebildet.

In einer vorteilhaften Ausgestaltung ist in das Führungsrohr wenigstens eine Öffnung eingebracht. Die Öffnung wirkt als Kühlfenster für den Dämpfer. In einer vorteilhaften Ausgestaltung sind eine Vielzahl an Öffnungen in das Führungsrohr eingebracht.

In einer vorteilhaften Ausgestaltung weist der Steuerflansch eine ovale Kontur auf. Dadurch kann zur Montage der Luftfeder der im drucklosen Zustand schlauchförmig vorliegende Luftfederbalg einfach über den Steuerflansch gezogen werden.

Nachfolgend werden die Luftfeder sowie weitere Merkmale und Vorteile anhand eines Ausführungsbeispiels beschrieben, das in den beigefügten Zeichnungen schematisch dargestellt ist. Hierbei zeigt:
- Figur 1: einen Längsschnitt durch eine Luftfeder mit einem Niveausteuerungssystem;
- Figur 2: einen vergrößerten Ausschnitt des Längsschnitts des Steuerventils von Fig. 1; und
- Figur 3: einen Längsschnitt durch die Luftfeder, wobei das Niveausteuerungssystem ungeschnitten dargestellt ist.

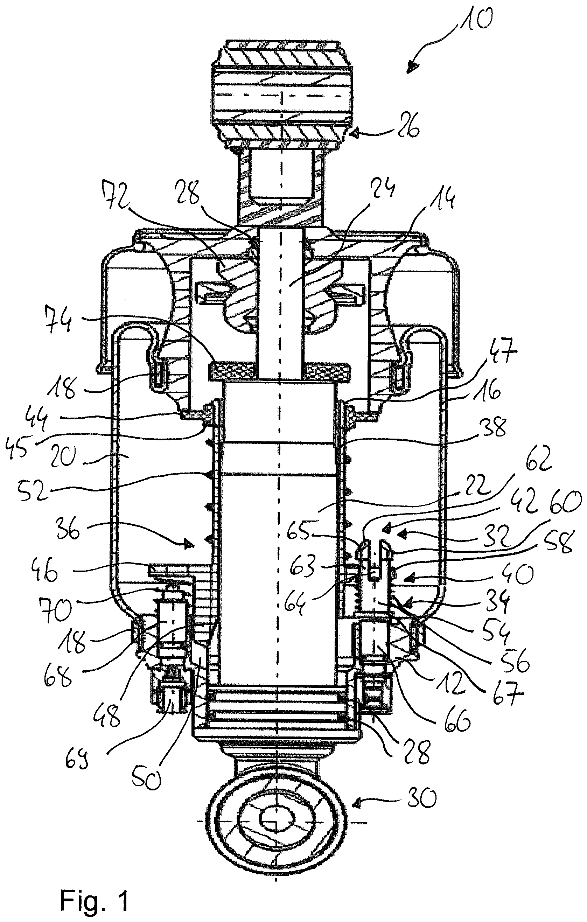

In Figur 1 ist eine Luftfeder 10 gezeigt, die zur Steuerung der Niveaulage einer nicht dargestellten Fahrerkabine oder eines nicht dargestellten Kraftfahrzeugs dient.

Die Luftfeder 10 weist ein Verschlusselement 12, einen Abrollkolben 14 und einen das Verschlusselement 12 und den Abrollkolben 14 miteinander verbindenden Luftfederbalg 16 auf. Der Luftfederbalg 16 ist jeweils mittels eines Klemmrings 18 an dem Verschlusselement 12 und dem Abrollkolben 14 luftdicht befestigt und bildet einen mit Fluid gefühlten Druckraum 20. Das Fluid kann Luft, insbesondere Druckluft, Gas oder ein kompressibles Medium sein.

Die Luftfeder 10 weist ferner einen Dämpfer 22 auf, dessen Kolbenstange 24 sich durch den Abrollkolben 14 hindurch erstreckt und die an ihrem freien Ende mit einem ersten Elastomerlager 26 verbunden ist. Über das erste Elastomerlager 26 wird die Luftfeder 10 an einem nicht dargestellten ersten Fahrzeugteil befestigt. Zur Abdichtung des Druckraumes 20 ist zwischen dem Abrollkolben 14 und der Kolbenstange 24 ein Dichtring 28 vorgesehen.

Um die Einfederbewegung der Luftfeder 10 zu begrenzen, ist innerhalb des Abrollkolbens 14 ein Puffer 72 angeordnet, welcher von der Kolbenstange 24 durchdrungen ist und sich auf einem Boden des Abrollkolbens 14 abstützt. Der Puffer 72 wirkt mit einer auf der Oberseite des Dämpfers 22 angeordneten Dämpferkappe 74 zusammen.

Wie zudem in Fig. 1 ersichtlich ist, ist der Dämpfer 22 mit dem Verschlusselement 12 verbunden. Insbesondere erstreckt sich der Dämpfer 22 durch das Verschlusselement 12. Zur Abdichtung des Druckraumes 20 sind zwischen dem Verschlusselement 12 und der Kolbenstange 24 Dichtringe 28 vorgesehen. Der Dämpfer 22 weist an seinem aus dem Verschlusselement 12 herausragenden Ende ein zweites Elastomerlager 30 auf, das zur Befestigung der Luftfeder 10 an einem nicht dargestellten zweiten Fahrzeugteil dient.

In die Luftfeder 10 ist zudem ein Niveausteuerungssystem 32 zum Zuführen und/oder Abführen von Fluid in den Druckraum 20 integriert, um die Niveaulage des Kraftfahrzeugs oder einer Fahrerkabine in Abhängigkeit vom Luftfederhub zu steuern.

Das Niveausteuerungssystem 32 weist wenigstens ein Steuerventil 34 zum Zu- und/oder Abführen des Fluids in den Druckraum 20 und eine Betätigungseinrichtung 36 auf, die mit dem Steuerventil 34 in Wirkverbindung steht.

Die Betätigungseinrichtung 36 weist ein Führungsrohr 38, das mit dem Abrollkolben 14 gekoppelt ist und beweglich auf dem Dämpfer 22 angeordnet ist, ein Betätigungselement 40, das das Steuerventil 34 betätigt, und eine Druckfedereinrichtung 42 auf.

Das Führungsrohr 38 ist über ein Flanschelement 44 mit dem Abrollkolben 14 verbunden. Das Flanschelement 44 ist als eine Ringscheibe ausgebildet und weist radial innen einen Hülsenabschnitt 45 auf, der verschiebbar auf dem Führungsrohr 38 angeordnet ist. Der Abrollkolben 14 stützt sich radial außen auf dem Flanschelement 44 ab. Um ein Herunterrutschen des Flanschelementes 44 von dem Führungsrohr 38 zu verhindern, weist das Führungsrohr 38 endseitig Nasen 47 auf.

Das Führungsrohr 38 weist an seinem dem Steuerventil 34 zugewandten Ende einen Steuerflansch 46 auf, der oval ausgebildet ist. Durch die ovale Kontur des Steuerflansches 46 kann zur Montage der Luftfeder 10 der im drucklosen Zustand schlauchförmig vorliegende Luftfederbalg 16 einfach über den Steuerflansch 46 gezogen werden.

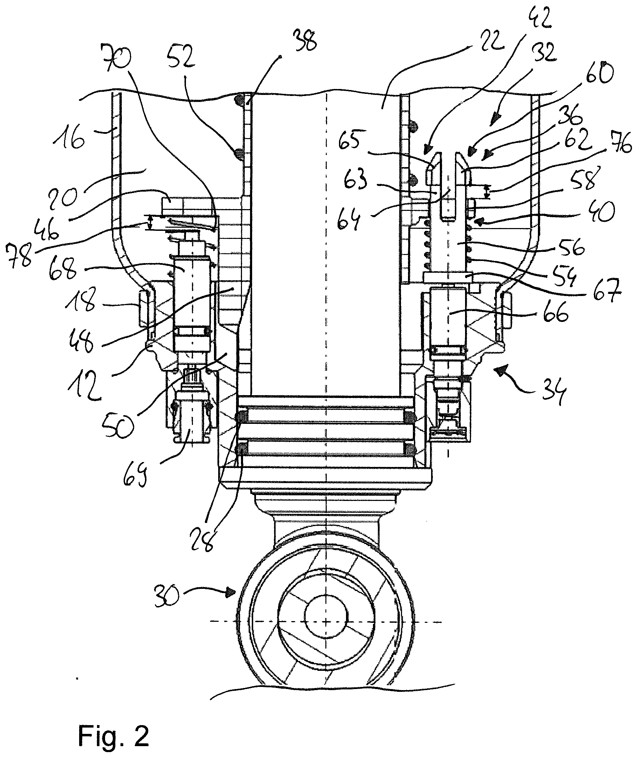

Wie in Figur 2 ersichtlich ist, weist das Führungsrohr 38 einen Vorsprung 48 auf, der in einem in dem Verschlusselement 12 ausgebildeten Kanal 50 geführt ist. Während einer Ein- und Ausfederung der Luftfeder 10 bewegt sich der Vorsprung 48 in dem Kanal 50. Dadurch wird eine Rotation zwischen dem Dämpfer 22 und der Betätigungseinrichtung 36 während einer Ein- und Ausfederung verhindert.

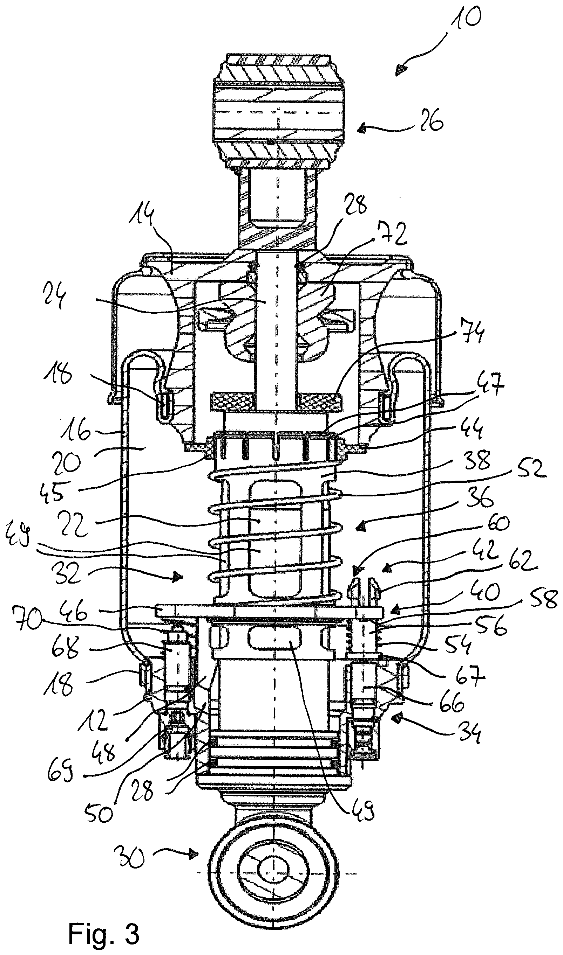

Wie in Fig. 3 ersichtlich ist, weist das Führungsrohr 38 eine Vielzahl an Öffnungen 49 auf. Die Öffnungen 49 dienen zur Kühlung des Dämpfers 22.

Die Druckfedereinrichtung 42 weist eine Zentralfeder 52, die das Führungsrohr 38 umgibt, und eine Vorspannfeder 54 auf, die dem Steuerventil 34 zugeordnet ist. Beide Federn sind als Druckfedern ausgebildet, wobei die Zentralfeder 52 stärker vorgespannt ist als die Vorspannfeder 54. Auf der Zentralfeder 52 stützt sich das Flanschelement 54 ab. Die Zentralfeder 52 selbst stützt sich auf dem Steuerflansch 46 ab. Die Vorspannfeder 54 ist mit dem Betätigungselement 40 gekoppelt und stützt sich vollflächig an einer Unterseite des Steuerflansches 46 ab.

Wie insbesondere in Figur 2 ersichtlich ist, ist das Betätigungselement 40 als ein Stiftelement 56 ausgebildet, das sich beweglich durch eine in dem Steuerflansch 46 eingebrachte Durchgangsöffnung 58 hindurch erstreckt.

Das Stiftelement 56 weist auf der dem Steuerventil 34 abgewandten Seite eine Erweiterung 60 in Form von Rastnasen 62 auf. Die Rastnasen 62 sind als Stifte 63 mit Verdickungen 65 an ihren freien Enden ausgebildet. Die Stifte 63 sind durch Ausnehmungen 64 voneinander getrennt, so dass die Rastnasen 62 verschwenkbar sind. Über die Rastnasen 62 erfolgt die Befestigung des Stiftelementes 56 an dem Steuerflansch 46. Hierzu wird das Stiftelement 56 mit den Rastnasen 62 in die Durchgangsöffnung 58 eingesetzt. Dadurch werden die Rastnasen 62 zusammengedrückt, so dass das Stiftelement 56 durch die Durchgangsöffnung 58 hindurch geschoben werden kann. Wenn die Rastnasen 62 aus der Durchgangsöffnung 58 heraustreten, verschwenken diese wieder in ihre ursprüngliche Stellung und verhindern so ein Herausziehen des Stiftelementes 56 aus der Durchgangsöffnung 58.

Wie zudem in Fig. 2 ersichtlich ist, weist das Stiftelement 56 an einem dem Steuerventil 34 zugewandten Ende einen umlaufenden Absatz 67 auf, auf dem sich die Vorspannfeder 54 abstützt, um das Stiftelement 56 gegen das Steuerventil 34 zu drücken.

Das Steuerventil 34 weist ein Auslassventil 66 und ein Einlassventil 68 auf, die beide als Federventile ausgebildet sind, wobei das Auslassventil 66 mit dem Stiftelement 56 und das Einlassventil 68 mit dem Steuerflansch 46 wirkverbunden ist. Wie zudem in Fig. 2 ersichtlich ist, ist zwischen dem Steuerflansch 46 und dem Einlassventil 68 eine Feder 70 angeordnet, die zu der Betätigungseinrichtung 36 gehört.

Wenn das Auslassventil 66 geöffnet ist, wird während einer Ausfederung Fluid aus dem Druckraum 20 abgelassen. Wenn das Einlassventil 68 geöffnet ist, wird dem Druckraum 20 während einer Einfederung Fluid zugeführt. Hierzu ist das Einlassventil 68 über einen Konnektor 69 mit einer nicht dargestellten Fluidversorgungseinrichtung verbunden.

In dem in den Figuren 1 und 3 gezeigten Zustand sind das Auslassventil 66 und das Einlassventil 68 geschlossen, indem das Stiftelement 56 durch die Vorspannung der Druckfedereinrichtung 42 gegen das Auslassventil 66 gedrückt und der Steuerflansch 46 von dem Einlassventil 68 beabstandet ist. Damit das Auslassventil 66 geschlossen bleibt, muss die Vorspannung der Vorspannfeder 54 größer sein als die Vorspannung der Feder im Auslassventil 66. Zum Öffnen des Auslassventils 66 während einer Ausfederung wird das Führungsrohr 38 aufgrund der Vorspannung der Feder 70 von dem Steuerventil 34 weg bewegt, wobei das Stiftelement 56 nach Überbrückung eines ersten Freiwegs 76 von dem Steuerflansch 46 über die Rastnasen 62 mitgenommen und somit von dem Auslassventil 66 wegbewegt wird. Zum Öffnen des Einlassventils 68 während einer Einfederung drückt der Steuerflansch 46 nach Überbrückung eines zweiten Freiwegs 78 sowie der Federkraft der Feder 70 auf das Einlassventil 68.

Im Folgenden wird die Steuerung der Niveaulage der Luftfeder 10 mittels des Niveausteuerungssystems 32 beschrieben. In den Figuren 1 und 3 ist die neutrale Stellung der Luftfeder 10 gezeigt, bei der das Auslassventil 66 und das Einlassventil 68 geschlossen sind.

Während einer Einfederung bzw. Beladung fährt die Kolbenstange 24 in den Dämpfer 22 ein und gleichzeitig rollt der Luftfederbalg 16 an dem Abrollkolben 14 ab. Dadurch bewegt sich der Abrollkolben 14 in Richtung des Verschlusselementes 12 nach unten und übt so eine Kraft auf das Flanschelement 44 aus. Da sich das Flanschelement 44 auf der Zentralfeder 52 abstützt, übt die Zentralfeder 52 einen Druck auf das Führungsrohr 38 aus, so dass sich das Führungsrohr in Richtung des Verschlusselementes 12 bewegt wird. Während der Einfederung drücken die Druckfedereinrichtung 42 und der Steuerflansch 46 das Stiftelement 56 gegen das Auslassventil 66. Dadurch ist das Auslassventil 66 während einer Einfederung geschlossen. Gleichzeitig bewegt sich das Führungsrohr 38 aufgrund der in die Zentralfeder 52 eingeleiteten Kraft auf das Verschlusselement 12 zu, wobei der Steuerflansch 46 die Feder 70 komprimiert. Nach Überbrückung des zweiten Freiwegs 78 drückt das Flanschelement 44 auf das Einlassventil 68. Dadurch wird das Einlassventil 68 geöffnet, so dass Fluid über das Einlassventil 68 in den Druckraum 20 strömt. Bei einer weiteren Einfederung wird Zentralfeder 52 komprimiert und übernimmt so die Abfederung.

Bei einer Ausfederung bzw. Entladung bewegt sich der Abrollkolben 14 weg von dem Verschlusselement 12 nach oben, wobei die Zentralfeder 52 ausfedert und das Flanschelement 44 nach oben drückt. Gleichzeitig drücken die Vorspannfeder 54 und die Feder 70 das Führungsrohr 38 nach oben. Solange der erste Freiweg 76 noch nicht überbrückt ist, bewegt sich der Steuerflansch 46 relativ zu dem Stiftelement 56, wobei das Stiftelement 56 weiterhin aufgrund der Vorspannung der Vorspannfeder 54 gegen das Auslassventil 66 gedrückt wird. Nach Überbrückung des ersten Freiwegs 76 ist die Vorspannfeder 54 vollständig ausgefedert, so dass nur noch die Feder 70 das Führungsrohr 38 in Richtung des Abrollkolbens 14 drückt. Nach Überbrückung des ersten Freiwegs 76 nimmt der Steuerflansch 46 das Stiftelement 56 über die Rastnasen 62 mit. Dadurch wird das Stiftelement 56 von dem Auslassventil 66 weg bewegt und das Auslassventil 66 wird geöffnet, so dass Fluid aus dem Druckraum 20 in die Umgebung strömt.

Bei der Luftfeder 10 kann sich die Vorspannfeder 54 aufgrund der konstruktiven Ausgestaltung der Betätigungseinrichtung 36 vollflächig an dem Steuerflansch 46 abstützen, so dass die gesamte Federkraft der Vorspannfeder 54 auf das Stiftelement 56 und somit auf das Auslassventil 66 drückt. Dadurch kann die Federkraft beziehungsweise die Vorspannung der Vorspannfeder 54 und der Zentralfeder 52 reduziert werden. Somit weist die Druckfedereinrichtung 42 der Luftfeder 10 insgesamt eine geringe Vorspannung auf, wodurch der Komfort und das akustische Verhalten der Luftfeder 10 verbessert ist. Durch die reduzierte Vorspannung der Druckfedereinrichtung 42 kann das Verschlusselement 12 dünner ausgebildet werden, was zu einer Materialeinsparung führt. Zudem kann für das Verschlusselement 12 und/oder den Abrollkolben 14 ein Material mit einer geringeren Steifigkeit beziehungsweise Festigkeit, wie beispielsweise PA6, verwendet werden, was zu einer Kostenersparnis führt. Darüber hinaus weist die Betätigungseinrichtung 36 eine geringe Teileanzahl auf, so dass die Montagekosten der Luftfeder 10 reduziert sind. Ferner kann der Durchmesser des Abrollkolbens 14 reduziert werden, so dass die Steifigkeit der Luftfeder 10 in einem größeren Bereich dargestellt werden kann. Schließlich steht aufgrund der konstruktiven Ausgestaltung der Betätigungseinrichtung 36 mehr Bauraum für die Dämpferkappe 74 zur Verfügung, so dass deren Durchmesser vergrößert werden kann, was in einer höheren Lebensdauer des Puffers 72 resultiert. Zudem weist die Druckfedereinrichtung 42, insbesondere die Zentralfeder 52, einen geringen Federweg auf.

### Bezugszeichenliste

- 10: Luftfeder
- 12: Verschlusselement
- 14: Abrollkolben
- 16: Luftfederbalg
- 18: Klemmring
- 20: Druckraum
- 22: Dämpfer
- 24: Kolbenstange
- 26: erstes Elastomerlager
- 28: Dichtring
- 30: zweites Elastomerlager
- 32: Niveausteuerungssystem
- 34: Steuerventil
- 36: Betätigungseinrichtung
- 38: Führungsrohr
- 40: Betätigungselement
- 42: Druckfedereinrichtung
- 44: Flanschelement
- 45: Hülsenabschnitt
- 46: Steuerflansch
- 47: Nase
- 48: Vorsprung
- 49: Öffnung
- 50: Kanal
- 52: Zentralfeder
- 54: Vorspannfeder
- 56: Stiftelement
- 58: Durchgangsöffnung
- 60: Erweiterung
- 62: Rastnase
- 63: Stift
- 64: Ausnehmung
- 65: Verdickung
- 66: Auslassventil
- 67: Absatz
- 68: Einlassventil
- 69: Konnektor
- 70: Feder
- 72: Puffer
- 74: Dämpferkappe
- 76: erster Freiweg
- 78: zweiter Freiweg

## Patentansprüche

1. Luftfeder (10) zur Steuerung der Niveaulage einer Fahrerkabine oder eines Kraftfahrzeuges, mit einem Verschlusselement (12), einem Abrollkolben (14) und einem Luftfederbalg (16), der mit dem Abrollkolben (14) und dem Verschlusselement (12) unter Ausbildung eines mit Fluid gefüllten Druckraumes (20) verbunden ist, wobei ein Niveausteuerungssystem (32) zum Zuführen und/oder Abführen von Fluid in den Druckraum (20) integriert ist, um die Niveaulage der Fahrerkabine oder des Kraftfahrzeuges in Abhängigkeit vom Luftfederhub zu steuern, wobei das Niveausteuerungssystem (32) wenigstens ein Steuerventil (34) zum Zu- und/oder Abführen des Fluids in den Druckraum (20) und eine Betätigungseinrichtung (36) aufweist, die mit dem Steuerventil (34) in Wirkverbindung steht, wobei die Betätigungseinrichtung (36) ein Führungsrohr (38), das mit dem Abrollkolben (14) oder dem Verschlusselement (12) gekoppelt und beweglich innerhalb des Druckraumes (20) angeordnet ist, ein Betätigungselement (40), das als Stiftelement (56) ausgebildet ist und das Steuerventil (34) betätigt, und eine Druckfedereinrichtung (42) aufweist, wobei die Druckfedereinrichtung (42) eine mit dem Abrollkolben (14) oder dem Verschlusselement (12) gekoppelte Zentralfeder (52) und eine mit dem Stiftelement (56) gekoppelte Vorspannfeder (54) aufweist, wobei das Führungsrohr (38) einen Steuerflansch (46) aufweist, mit dem das Stiftelement (56) gekoppelt ist und an dem sich die Vorspannfeder (54) abstützt, um das Stiftelement (54) gegen das Steuerventil (34) zu drücken.

2. Luftfeder nach Anspruch 1, **dadurch gekennzeichnet, dass** das Stiftelement (56) und der Steuerflansch (46) relativ zueinander bewegbar sind, so dass sich während einer Ausfederung der Luftfeder (10) der Steuerflansch (46) über einen ersten Freiweg (76) relativ zu dem Stiftelement (56) bewegt und nach Überbrückung des ersten Freiwegs (76) der Steuerflansch (46) das Stiftelement (56) mitnimmt und von dem Steuerventil (34) wegbewegt.

3. Luftfeder nach Anspruch 1 oder 2, **dadurch gekennzeichnet, dass** das Stiftelement (56) an einem ersten Ende eine Erweiterung (60) aufweist.

4. Luftfeder nach Anspruch 3, **dadurch gekennzeichnet, dass** die Erweiterung (60) als Rastnasen (62) ausgebildet ist.

5. Luftfeder nach einem der vorhergehenden Ansprüche, **dadurch gekennzeichnet, dass** das Stiftelement (56) an einem zweiten Ende einen umlaufenden Absatz (67) aufweist, an dem sich die Vorspannfeder (54) abstützt, um das Stiftelement (54) gegen das Steuerventil (34) zu drücken.

6. Luftfeder nach einem der vorhergehenden Ansprüche, **dadurch gekennzeichnet, dass** das Steuerventil (34) ein Auslassventil (66) und ein Einlassventil (68) aufweist, wobei das Stiftelement (56) mit dem Auslassventil (66) und der Steuerflansch (46) mit dem Einlassventil (68) wirkverbunden ist.

7. Luftfeder nach Anspruch 6, **dadurch gekennzeichnet, dass** die Betätigungseinrichtung (36) derart ausgebildet ist, dass während einer Ausfederung das Einlassventil (68) geschlossen und das Auslassventil (66) geöffnet ist und während einer Einfederung das Einlassventil (68) geöffnet und das Auslassventil (66) geschlossen ist.

8. Luftfeder nach einem der Ansprüche 6 oder 7, **dadurch gekennzeichnet, dass** während einer Einfederung nach Überbrückung eines zweiten Freiwegs (78) der Steuerflansch (46) gegen das Einlassventil (68) drückt, um das Einlassventil (68) zu öffnen.

9. Luftfeder nach einem der Ansprüche 6 bis 8, **dadurch gekennzeichnet, dass** die Betätigungseinrichtung (36) eine weitere Feder (70) aufweist, die zwischen dem Steuerflansch (46) und dem Einlassventil (68) angeordnet ist und die den Steuerflansch (46) von dem Auslassventil (66) wegdrückt.

10. Luftfeder nach einem der vorhergehenden Ansprüche, **dadurch gekennzeichnet, dass** die Zentralfeder (52) um das Führungsrohr (38) angeordnet ist.

11. Luftfeder nach einem der vorhergehenden Ansprüche, **dadurch gekennzeichnet, dass** der Abrollkolben (14) über ein Flanschelement (44) mit dem Führungsrohr (38) verbunden ist, wobei sich das Flanschelement (44) auf der Zentralfeder (52) abstützt und verschiebbar auf dem Führungsrohr (38) angeordnet ist.

12. Luftfeder nach einem der vorhergehenden Ansprüche, **dadurch gekennzeichnet, dass** das Führungsrohr (38) wenigstens einen Vorsprung (48) aufweist, der sich während einer Ein- und Ausfederung innerhalb eines in dem Verschlusselement (12) oder dem Abrollkolben (14) eingebrachten Kanals (50) bewegt.

13. Luftfeder nach einem der vorhergehenden Ansprüche, **gekennzeichnet durch** einen Dämpfer (22), auf dem das Führungsrohr (38) beweglich angeordnet ist.

14. Luftfeder nach einem der vorhergehenden Ansprüche, **dadurch gekennzeichnet, dass** in das Führungsrohr (38) wenigstens eine Öffnung (49) eingebracht ist.

15. Luftfeder nach einem der vorhergehenden Ansprüche, **dadurch gekennzeichnet, dass** der Steuerflansch (46) eine ovale Kontur aufweist.

## Claims

1. Air spring (10) for controlling a level position of a driver's cabin or a motor vehicle with a closing member (12), a rolling piston (14), and an air spring bellows (16) connected to the rolling piston (14) and the closing member (12) to form a fluid-filled pressure chamber (20), wherein a level control system (32) for supplying and/or discharging fluid is integrated into the pressure chamber (20) to control the level position of the driver's cabin or the motor vehicle depending on an air spring stroke; wherein the level control system (32) has at least one control valve (34) for supplying and/or discharging fluid to and/or from the pressure chamber (20), and an actuator (36) that is operatively connected to the control valve (34); wherein the actuator (36) includes a guide tube (38) coupled to the rolling piston (14) or the closing member (12) and is movably arranged within the pressure chamber (20), an actuating member (40) formed as a pin member (56) and configured to operate the control valve (34), and a compression spring device (42); wherein the compression spring device (42) has a central spring (52) coupled to the rolling piston (14) or the closing member (12), and a biasing spring (54) coupled to the control valve (34); and wherein the guide tube (38) has a control flange (46) to which the pin member (56) is coupled and on which the biasing spring (54) is supported to press the pin member (56) against the control valve (34).

2. Air spring according to claim 1, **characterized in that** the pin member (56) and the control flange (46) are movable relative to each other, such that the control flange (46) moves relative to the pin member (56) during a rebound of the air spring over a first free travel (76) and after overcoming the first free travel (76), the control flange (46) entrains the pin member (56) and moves it away from the control valve (34).

3. Air spring according to claim 1 or 2, **characterized in that** the pin member (56) has an extension (60) at a first end.

4. Air spring according to claim 3, **characterized in that** the extension (60) comprises latching lugs (62).

5. Air spring according to one of the preceding claims, **characterized in that** the pin member (56) has, at a second end, a peripheral shoulder (67) on which the biasing spring (54) is supported to press the pin member (56) against the control valve (34).

6. Air spring according to one of the preceding claims, **characterized in that** the control valve (34) has an exhaust valve (66) and an inlet valve (68); wherein the pin member (56) is operatively connected to the exhaust valve (66) and the control flange (46) is operatively connected to the inlet valve (68).

7. Air spring according to claim 6, **characterized in that** the actuator (36) is configured so the inlet valve (68) is closed and the exhaust valve (66) is opened during a rebound, and the inlet valve (68) is opened and the exhaust valve (66) is closed during a deflection.

8. Air spring according to claim 6 or 7, **characterized in that** during a deflection, after overcoming a second free travel (78), the control flange (46) is pressed against the inlet valve (68) to open the inlet valve (68).

9. Air spring according to one of claims 6 to 8, **characterized in that** the actuator (36) has another spring (70) which is arranged between the control flange (46) and the inlet valve (68) and which presses the control flange (46) away from the exhaust valve (66).

10. Air spring according to one of the preceding claims, **characterized in that** the central spring (52) is arranged around the guide tube (38).

11. Air spring according one of the preceding claims, **characterized in that** the rolling piston (14) is connected to the guide tube (38) via a flange element (44), wherein the flange element (44) is supported on the central spring (52) and is slidably mounted on the guide tube (38).

12. Air spring according to one of the preceding claims, **characterized in that** the guide tube (38) has at least one projection (48) which moves during a deflection and rebound within a channel (50) that is introduced into the closing member (12) or the rolling piston (14).

13. Air spring according to one of the preceding claims, **characterized in that** a damper (22) is movably attached on the guide tube (38).

14. Air spring according to one of the preceding claims, **characterized in that** at least one opening (49) is introduced into the guide tube (38).

15. Air spring according to one of the preceding claims, **characterized in that** the control flange (46) has an oval contour.

## Revendications

1. Ressort pneumatique (10) pour la commande de la position de niveau d'une cabine de conducteur ou d'un véhicule automobile, avec un élément de fermeture (12), un piston roulant (14) et un soufflet de ressort pneumatique (16) qui est relié au piston roulant (14) et à l'élément de fermeture (12) en formant une chambre de pression (20) remplie de fluide, dans lequel un système de commande de niveau (32) pour amener et/ou évacuer du fluide est intégré dans la chambre de pression (20), pour la commande de la position de niveau de la cabine du conducteur ou du véhicule automobile en fonction de la course du ressort pneumatique, le système de commande de niveau (32) présentant au moins une valve de contrôle (34) pour amener et/ou évacuer du fluide dans la chambre de pression (20) et un dispositif d'actionnement (36) qui est en liaison active avec la valve de contrôle (34), dans lequel le dispositif d'actionnement (36) comprend un tube de guidage (38) qui est couplé au piston roulant (14) ou à l'élément de fermeture (12) et qui est disposé de manière mobile à l'intérieur de la chambre de pression (20), un élément d'actionnement (40) qui est formé comme un élément de tige (56) et qui actionne la valve de contrôle (34), et un dispositif de ressort de compression (42), dans lequel le dispositif de ressort de compression (42) comprend un ressort central (52) couplé au piston roulant (14) ou à l'élément de fermeture (12) et un ressort de sollicitation (54) couplé à l'élément de tige (56), dans lequel le tube de guidage (38) comprend une bride de commande (46) à laquelle l'élément de tige (56) est couplé et contre laquelle le ressort de sollicitation (54) est supporté afin de presser l'élément de tige (54) contre la valve de contrôle (34).

2. Ressort pneumatique selon la revendication 1, **caractérisé en ce que** l'élément de tige (56) et la bride de commande (46) sont mobiles l'un par rapport à l'autre, de sorte que, lors d'une déviation du ressort pneumatique (10), la bride de commande (46) se déplace sur un premier trajet libre (76) par rapport à l'élément de tige (56) et, après avoir franchi le premier trajet libre (76), la bride de commande (46) entraîne l'élément de tige (56) et s'éloigne de la valve de contrôle (34).

3. Ressort pneumatique selon la revendication 1 ou 2, **caractérisé en ce que** l'élément de tige (56) comprend une extension (60) à une première extrémité.

4. Ressort pneumatique selon la revendication 3, **caractérisé en ce que** la extension (60) est formé de pattes de verrouillage (62).

5. Ressort pneumatique selon l'une quelconque des revendications précédentes, **caractérisé en ce que** l'élément de tige (56) comporte, à une deuxième extrémité, un épaulement circonférentiel (67) contre lequel s'appuie le ressort de sollicitation (54) pour presser l'élément de tige (54) contre la valve de contrôle (34).

6. Ressort pneumatique selon l'une quelconque des revendications précédentes, **caractérisé en ce que** la valve de contrôle (34) comprend une valve de sortie (66) et une valve d'entrée (68), l'élément de tige (56) étant relié fonctionnellement à la valve de sortie (66) et la bride de commande (46) étant reliée fonctionnellement à la valve d'entrée (68).

7. Ressort pneumatique selon la revendication 6, **caractérisé en ce que** le dispositif d'actionnement (36) est conçu de telle sorte que, lors d'une déviation, la valve d'entrée (68) est fermée et la valve de sortie (66) est ouverte et, lors d'une compression, la valve d'entrée (68) est ouverte et la valve de sortie (66) est fermée.

8. Ressort pneumatique selon l'une des revendications 6 ou 7, **caractérisé en ce que**, lors d'une compression après le franchissement d'une deuxième course libre (78), la bride de commande (46) s'appuie contre la valve d'entrée (68) pour ouvrir la valve d'entrée (68).

9. Ressort pneumatique selon l'une quelconque des revendications 6 à 8, **caractérisé en ce que** le dispositif d'actionnement (36) comprend un autre ressort (70) disposé entre la bride de commande (46) et la valve d'entrée (68) et poussant la bride de commande (46) à l'écart de la valve de sortie (66).

10. Ressort pneumatique selon l'une quelconque des revendications précédentes, **caractérisé en ce que** le ressort central (52) est disposé autour du tube de guidage (38).

11. Ressort pneumatique selon l'une des revendications précédentes, **caractérisé en ce que** le piston roulant (14) est relié au tube de guidage (38) par l'intermédiaire d'un élément de bride (44), l'élément de bride (44) s'appuyant sur le ressort central (52) et étant disposé de manière mobile sur le tube de guidage (38).

12. Ressort pneumatique selon l'une des revendications précédentes, **caractérisé en ce que** le tube de guidage (38) comprend au moins une saillie (48) qui, lors d'une compression et d'une extension, se déplace à l'intérieur d'un canal (50) formé dans l'élément de fermeture (12) ou le piston roulant (14).

13. Ressort pneumatique selon l'une des revendications précédentes, **caractérisé par** un amortisseur (22) sur lequel le tube de guidage (38) est disposé de façon mobile.

14. Ressort pneumatique selon l'une des revendications précédentes, **caractérisé en ce qu'**au moins une ouverture (49) est réalisée dans le tube de guidage (38).

15. Ressort pneumatique selon l'une des revendications précédentes, **caractérisé en ce que** la bride de commande (46) présente un contour ovale.
